# EUROPEAN PATENT APPLICATION

(11) **EP 4 734 597 A1**
(43) Date of publication of application: **29.04.2026**
(21) Application number: 23941951.8
(22) Date of filing: 21.06.2023
(51) Int. Cl.: H04W 24/08

(54) **WIRELESS COMMUNICATION METHOD, AND DEVICE**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN)
(74) Representative: RGTH
(86) International application number: PCT/CN2023/101840
(87) International publication number: WO 2024/259661

(57) **Abstract**

The present application provides a wireless communication method, and device. The method comprises: a first network element receiving first information reported by a second network element, wherein the first information is used for indicating a performance monitoring result of a first model used by a terminal device. In the embodiments of the present application, a network element (i.e., a first network element) of a core network receives a model performance monitoring result reported by a terminal device (i.e., a performance monitoring result of a first model used by terminal device), thereby aiding the core network or a third-party server in monitoring the performance of a model provided thereby, and thus helping to ensure the communication quality of a communication system.

## Description

### TECHNICAL FIELD

This application relates to the field of communications technologies, and more specifically, to a wireless communication method and a device.

### BACKGROUND

To ensure performance of a model, such as an artificial intelligence (artificial intelligence, AI) model, it is usually necessary to monitor the performance of the model. For a case in which a model deployed on a terminal device side is generated by a core network or a third-party server, how to implement performance monitoring on the model on the terminal device side and how to ensure effective operation of the model on the terminal device side are urgent problems to be solved.

### SUMMARY

This application provides a wireless communication method and a device. The following describes the aspects involved in this application.

According to a first aspect, a wireless communication method is provided, and the method includes: receiving, by a first network element, first information reported by a second network element, where the first information is used for indicating a performance monitoring result of a first model used by a terminal device.

According to a second aspect, a wireless communication method is provided, and the method includes: transmitting, by a third network element, a request message to a first network element, where the request message is used for requesting to perform performance monitoring on a first model used by a terminal device.

According to a third aspect, a wireless communication method is provided, where the method includes: receiving, by a user plane function network element of a core network, first information reported by a terminal device, where the first information is used for indicating a performance monitoring result of a first model used by the terminal device.

According to a fourth aspect, a wireless communication method is provided, where the method includes: reporting, by a terminal device, first information to a network element of a core network, where the first information is used for indicating a performance monitoring result of a first model used by the terminal device.

According to a fifth aspect, a core network element is provided, where the core network element is a first network element, and the core network element includes: a first receiving unit, configured to receive first information reported by a second network element, where the first information is used for indicating a performance monitoring result of a first model used by a terminal device.

According to a sixth aspect, a core network element is provided, where the core network element is a third network element, and the core network element includes: a transmitting unit, configured to transmit a request message to a first network element, where the request message is used for requesting to perform performance monitoring on a first model used by a terminal device.

According to a seventh aspect, a core network element is provided, where the core network element is a user plane function network element of a core network, and the core network element includes: a first receiving unit, configured to receive first information reported by a terminal device, where the first information is used for indicating a performance monitoring result of a first model used by the terminal device.

According to an eighth aspect, a terminal device is provided, where the terminal device includes: a reporting unit, configured to report first information to a network element of a core network, where the first information is used for indicating a performance monitoring result of a first model used by the terminal device.

According to a ninth aspect, a core network element is provided. The core network element includes a processor and a memory, where the memory is configured to store one or more computer programs, and the processor is configured to invoke the computer program in the memory, to cause the core network element to execute some or all of the steps of the method in the first aspect, the second aspect, or the third aspect.

According to an eighth aspect, a terminal device is provided. The terminal device includes a processor and a memory, where the memory is configured to store one or more computer programs, and the processor is configured to invoke the computer program in the memory, to cause the core network element to execute some or all of the steps of the method in the fourth aspect.

According to a ninth aspect, an embodiment of this application provides a communications system, and the system includes the core network element and/or terminal device. In another possible design, the system may further include another device that interacts with the core network element and/or the terminal device in solutions provided in embodiments of this application.

According to a tenth aspect, an embodiment of this application provides a computer-readable storage medium. The computer-readable storage medium stores a computer program. The computer program causes a core network element to execute some or all of steps in the method according to the foregoing aspects.

According to an eleventh aspect, an embodiment of this application provides a computer program product. The computer program product includes a non-transitory computer-readable storage medium that stores a computer program, and the computer program is operable to cause a core network element to perform some or all of the steps of the methods according to the foregoing aspects. In some implementations, the computer program product may be a software installation package.

According to a twelfth aspect, an embodiment of this application provides a chip. The chip includes a memory and a processor, and the processor may invoke and run a computer program in the memory, to implement some or all of the steps of the methods according to the foregoing aspects.

In embodiments of this application, a network element (namely, a first network element) of a core network receives a model performance monitoring result (namely, a performance monitoring result of a first model used by a terminal device) reported by the terminal device, which helps to implement monitoring performance of the model provided by the core network or a third-party server, thereby helping to ensure communication quality of a communications system.

### BRIEF DESCRIPTION OF DRAWINGS

FIG. 1 shows a wireless communications system to which embodiments of this application are applicable.
FIG. 2 is a schematic diagram of a neural network to which embodiments of this application are applicable.
FIG. 3 is a schematic diagram of a convolutional neural network to which embodiments of this application are applicable.
FIG. 4 is a schematic flowchart of a communication method according to an embodiment of this application.
FIG. 5 is a schematic diagram of a method for performing model monitoring by using a control plane according to an embodiment of this application.
FIG. 6 is a schematic diagram of a method for performing model monitoring by using user plane data according to an embodiment of this application.
FIG. 7 is a schematic diagram of a structure of a core network element according to an embodiment of this application.
FIG. 8 is a schematic diagram of a structure of a core network element according to an embodiment of this application.
FIG. 9 is a schematic diagram of a structure of a core network element according to an embodiment of this application.
FIG. 10 is a schematic structural diagram of a terminal device according to an embodiment of this application.
FIG. 11 is a schematic structural diagram of an apparatus for communication according to an embodiment of this application.

### DESCRIPTION OF EMBODIMENTS

Technical solutions in this application are described below with reference to the accompanying drawings.

The technical solutions in embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

First, a network architecture applicable to this application is briefly described.

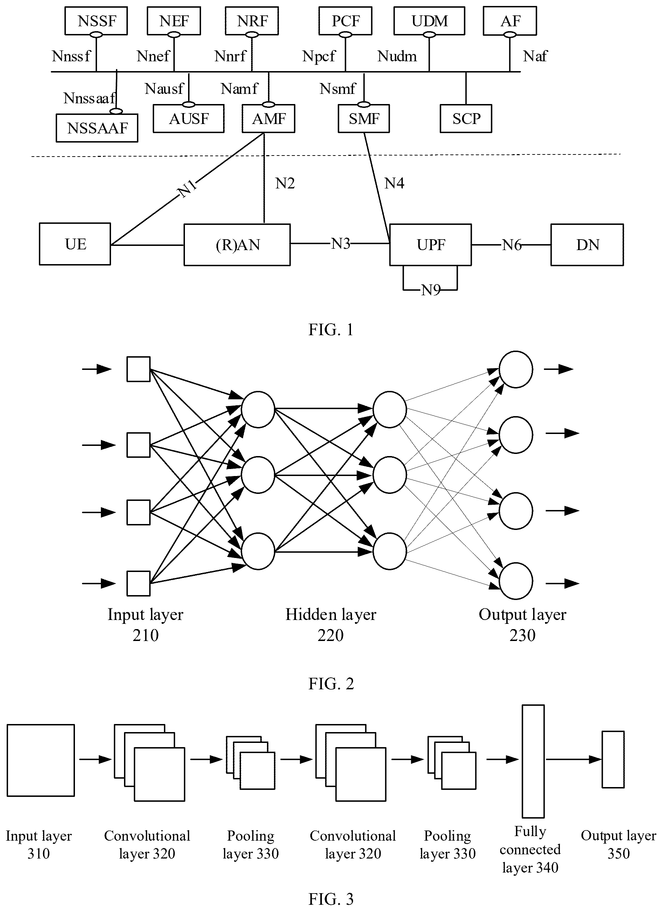

In an example, FIG. 1 is an example diagram of a network architecture. In the network architecture shown in FIG. 1, a 5G system is used as an example. A most important feature of the 5G network architecture is a service-oriented architecture, that is, a core network element (a service provider) may provide a specific service, which is invoked by another network element (a consumer) through a defined application programming interface (application programming interface, API). The network architecture may include three parts, which are respectively a terminal device part, a data network (data network, DN) part, and an operator network part. The operator network may include one or more of the following function entities: an access network (access network, AN) device, a user plane function (user plane function, UPF) entity, an access and mobility management function (access and mobility management function, AMF) entity, a session management function (session management function, SMF) entity, a policy control function (policy control function, PCF) entity, an application function (application function, AF) entity, a network slice selection function (network slice selection function, NSSF) entity, an authentication server function (authentication server function, AUSF) entity, a unified data management (unified data management, UDM) entity, a network exposure function (network exposure function, NEF) entity, a network repository function (network repository function, NRF) entity, a network slice-specific authentication and authorization function (network slice-specific authentication and authorization function, NSSAAF) entity, or the like. In the foregoing operator network, a part other than the access network device part may be referred to as a core network part, and a function entity of the core network part may be referred to as a core network device.

The following provides examples to describe functions of parts or function entities involved in the network architecture in the 5G network.

Terminal device: The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

Access network device: The access network device may be configured to provide a network access function for an authorized terminal device in a specific area, and can use transmission channels of different quality according to a level, a service requirement, and the like of the terminal device. The access network device can manage a radio resource, and provide an access service for the terminal device, to complete forwarding of a control signal and data between the terminal device and a core network.

The access network device may be a device in a wireless network. The access network device may also be referred to as a radio access network (radio access network, RAN) device or a network device. For example, the access network device may be a base station. The access network device in embodiments of this application may be a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device used by the access network device are not limited in embodiments of this application.

The base station may be a fixed or mobile base station. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the access network device in embodiments of this application may be a CU or a DU, or the access network device includes a CU and a DU. The gNB may further include an AAU.

The access network device and the terminal device may be deployed on land, including being indoors or outdoors, handheld, or vehicle-mounted, may be deployed on water, or may be deployed on an airplane, a balloon, or a satellite in the air. In embodiments of this application, a scenario in which the access network device and the terminal device are located is not limited.

UPF entity: The UPF is a user plane function in the core network, and may be responsible for forwarding and receiving of user data (for example, a service data flow) in the terminal device. For example, the UPF may receive user data from the DN, and transmit the user data to the terminal device by using the access network device. Alternatively, the UPF may receive user data from the terminal device by using the access network device, and then forward the user data to the DN. A transmission resource and a scheduling function in the UPF that provide a service for the terminal device are managed and controlled by the SMF. Bearers between a terminal and the UPF network element may include: a user plane connection between the UPF network element and the access network device, and a channel established between the access network device and the terminal. The user plane connection is a QoS flow (flow) that may be established between the UPF network element and the access network device for data transmission.

AMF entity: The AMF is a mobility management function in the core network, and may be configured to implement functions other than session management in functions of a mobility management entity (mobility management entity, MME), such as lawful interception or access authorization (or authentication). In some embodiments, in addition to performing mobility management on the terminal device, the AMF may be further responsible for forwarding of a message related to session management between the terminal device and the SMF.

SMF entity: The SMF is a session management function in the core network, and is mainly responsible for session management, internet protocol (internet protocol, IP) address allocation and management of the terminal device, selection of a manageable user plane function, policy control, a termination point of a charging function interface, downstream data notification, configuration of routing information for a user plane function, and the like.

PCF entity: The PCF is a policy management function in the core network, and may be responsible for formulation of policies related to mobility management, session management, charging, and the like of the terminal device. Specifically, the PCF may provide policy rule information and the like for a function entity (for example, the AMF entity or the SMF entity) on a control plane, to manage and control mobility management, session management, and the like of the terminal device.

AF entity: The AF mainly supports interaction with a 3rd generation partnership project (3rd generation partnership project, 3GPP) core network to provide services, for example, affecting a data routing decision, a policy control function, or providing a network side with some services of a third party. In other words, the AF may be mainly configured to transfer a requirement of an application side on the network side. In some embodiments, the AF may be understood as a third-party server, for example, an application server on an internet, which provides related service information, including providing the PCF with quality of service requirement information corresponding to a service, and transmitting user plane data information of a service to an A-UPF. In some embodiments, the AF may also be a content provider (content provider, CP).

DN: The DN refers to a network that may be used to provide transmission data. The DN may be a private network, for example, a local area network, or may be an external network that is not managed or controlled by an operator, for example, an internet (internet), or may be a dedicated network jointly deployed by operators, for example, a network that provides an IP multimedia core network subsystem (IP multimedia core network subsystem, IMS) service.

NSSF entity: The NSSF is network slice selection function in the core network, and supports the following functions: selecting a set of network slice instances that serve UE; determining allowed network slice selection assistance information (network slice selection assistance information, NSSAI), and when required, determining a mapping to subscribed single-network slice selection assistance information (single-network slice selection assistance information, S-NSSAI); determining configured NSSAI, and when required, determining a mapping to subscribed S-NSSAI; and determining a set of AMFs that may be used to query a UE, or determining a list of candidate AMFs based on a configuration.

The AUSF may be configured to: receive an identity authentication request for the terminal from the AMF, request a key from the UDM, and then forward a delivered key to the AMF for authentication processing.

The UDM may include functions such as generation and storage of user subscription data, and authentication data management, and supports an interaction with an external third-party server.

The NEF may be configured to implement capability exposure, that is, a capability of a network may be output to an external network based on the NEF. External untrusted applications may access internal data of a core network through the NEF, to ensure security of a network. The NEF may provide functions, such as QoS capability exposure, event subscription, and AF request distribution, for external applications.

The NRF is configured to perform registration, management, and status detection of a core network element, so as to implement automatic management of the core network element. When the core network element is started, it is necessary to register with the NRF to provide a service. For example, registration information may include a type, an address, a service list, and the like of the core network element.

In addition, in a 5G network, a network data analytics function (network data analytics function, NWDAF) is also added to a core network. Based on the NWDAF, data may be collected from various network elements and network management systems of the core network, and big data statistics, analysis, or intelligent data analysis may be performed, to obtain network side analysis or prediction data, thereby assisting all network elements to implement more effective control on a terminal device access based on data analysis results.

In some embodiments, the network architecture shown in FIG. 1 may include a user plane and a control plane. The user plane may be configured to transmit data, for example, data is transmitted by using a user plane function network element, and the control plane may be configured to transmit signalling. For example, the part above the dashed line in FIG. 1 may be referred to as the control plane, and the part below the dashed line may be referred to as the user plane.

It should be understood that the foregoing function entities in the core network may also be referred to as network elements, which is not limited in this application. For example, the UPF entity may also be referred to as a UPF network element, and the AMF entity may also be referred to as an AMF network element.

It should also be understood that in some embodiments, the xx function entity or the xx network element may also be directly referred to as the xx, for example, the UPF entity (or the UPF network element) may be referred to as the UPF, and the AMF entity (or the AMF network element) may be referred to as the AMF. For ease of description, the xx (such as the UPF or the AMF) mentioned in embodiments of this application may refer to the xx entity or the xx network element. Details are not described again in the following.

In the network architecture shown in FIG. 1, the parts or function entities may communicate with each other by using interfaces. For example, the terminal device may have an access stratum (access stratum, AS) connection to the AN by using a Uu interface, to perform AS message exchange and transmit wireless data. The terminal device may have a non-access stratum (none access stratum, NAS) connection to the AMF by using an N1 interface, to perform NAS message exchange. The AN may be connected to the AMF by using an N2 interface, to transfer radio bearer control information from the core network side to the AN. The UPF may perform data transmission with the AN by using an N3 interface, and perform data transmission with the DN by using an N6 interface, and the like. For interfaces used to connect other parts or function entities, reference may be made to FIG. 1. Details are not described herein again.

It should be understood that the foregoing network architecture is merely an example for description, and a network architecture applicable to embodiments of this application is not limited thereto. Any network architecture that can implement the functions of the foregoing function entities is applicable to embodiments of this application.

It should be understood that the access network device, the AMF, the SMF, the UPF, the PCF, and the like shown in FIG. 1 are only names, and the names do not constitute any limitation on the devices. In a 5G network and another network in the future, entities corresponding to the access network device, the AMF, the SMF, the UPF, the PCF, and the like may have other names. This is not specifically limited in embodiments of this application.

It should be understood that the names of the interfaces between the function entities shown in FIG. 1 are merely examples. In specific implementations, the names of the interfaces between the function entities may also be other names, for example, names of interfaces between function entities in a 6G network. This is not specifically limited in embodiments of this application.

It should be understood that all or some of functions of the communications device in this application may alternatively be implemented by software functions running on hardware, or by virtualization functions instantiated on a platform (for example, a cloud platform).

It should be understood that the system architecture described in embodiments of this application is intended to describe the technical solutions in embodiments of this application more clearly, and does not constitute any limitation on the technical solutions provided in embodiments of this application. It may be learned by a person skilled in the art that, with evolution of a network architecture, embodiments of this application may also be applicable to similar technical problems.

### Artificial intelligence

In recent years, artificial intelligence research represented by neural networks has made great achievements in many fields, and will also play an important role in people's production and life for a long time to come.

FIG. 2 is a schematic diagram of a neural network to which embodiments of this application are applicable. Layers of the neural network shown in FIG. 2 may be classified into three types according to locations of different layers: an input layer 210, a hidden layer 220, and an output layer 230. Generally, the first layer is the input layer 210, the last layer is the output layer 230, and the middle layers between the first layer and the last layer are the hidden layers 220. A sample may be input from the input layer 210, processed by the hidden layer 220, and a last result is generated at the output layer 230. Each node therein represents one processing unit, and may be considered as simulating a neuron. A plurality of neurons form a layer of neural network, and multi-layer information transfer and processing constitute a whole neural network.

With the continuous development of neural network researches, neural network deep learning algorithms are also proposed in recent years, in which more hidden layers are introduced. A neural network with a plurality of hidden layers is trained layer by layer to perform feature learning, which greatly improves a learning and processing capability of the neural network, and is widely used in aspects such as pattern recognition, signal processing, optimization combination, detection anomaly, and the like.

Likewise, with the development of deep learning, convolutional neural networks have been further researched. FIG. 3 is a schematic diagram of a convolutional neural network to which embodiments of this application are applicable. A basic structure of the convolutional neural network may include an input layer 310, a plurality of convolutional layers 320, a plurality of pooling layers 330, a fully connected layer 340, and an output layer 350. Due to introduction of the convolutional layers 320 and the pooling layers 330, dramatic increase of network parameters is controlled effectively, a quantity of parameters is limited, features of a local structure are mined, thereby improving robustness of an algorithm.

### AI and wireless communication

In R18, a plurality of cases in which AI is applied to wireless communication are proposed. For example, an AI/machine learning (machine learning, ML) technology is used to compress and decompress channel state information (channel state information, CSI), to reduce air interface transmission overheads and improve accuracy of CSI feedback information; an AI/ML technology is used to predict beam information in time domain/spatial domain, to reduce measurement overheads and delays, and improve accuracy in beam selection; and an AI/ML technology is used to predict location information of a UE, to improve accuracy of the location information of a terminal device in a non-line of sight/non-line-of-sight propagation (non line of sight, NLOS) scenario.

Compared to a previous wireless communications system, a current wireless communications system offers greater flexibility, focusing on broad applicability to different scenarios and efficient utilization of limited resources. However, foundational principles of most current work are still largely based on theoretical modeling of actual communication environments or simple parameter selection, and gains brought by this basic working approach are gradually weakening in variable scenarios and complex communication environments. In view of this, it is currently necessary to combine new methods and thoughts with traditional wireless communications theories and systems, so as to find another way to break a performance bottleneck and further improve performance of the wireless communications system.

Therefore, based on a plurality of cases of AI in wireless communication, R18 proposes a study on life cycle management of an AI model. The life cycle management of the AI model may include, for example, aspects such as model generation, model deployment, model transmission, model monitoring, and model update.

The model monitoring refers to performance monitoring of the model, which may include a plurality of aspects. In some embodiments, the performance monitoring of the model may include one or more of the following aspects: accuracy of model reasoning, time for model reasoning, an impact of the model on performance of a communications system, a size of the model, robustness of the model, generalization of the model, or the like.

The accuracy of model reasoning is the most important performance indicator for the model. An increased error rate in model reasoning of a UE indicates a decline in model performance, and thus the model no longer meets a requirement of the terminal device.

The time for model reasoning refers to time consumed for a terminal device using a model to perform reasoning. Usually, the time for model reasoning is inversely proportional to the performance of the model. For example, if reasoning time of a model is longer, performance of the model is considered to be poorer.

The impact of the model on performance of a communications system may be reflected by some performance parameters of a communications system, such as a throughput and a bit error rate.

The size of the model is limited to a storage capability of a terminal device. If the terminal device cannot provide enough space to store the model, the model affects communication performance of the terminal device.

The robustness of the model may be used to measure whether the model can still maintain accuracy of judgment when input data changes slightly, that is, whether the model has fault-tolerance capability for minor changes in input samples.

The generalization of the model may be used to measure a processing capability of the model to a new sample. If a model can be used accurately only in very few cases, it is considered that the generalization of the model is poor.

In actual use, an AI model has an applicable scope and use scenario. That is, an AI model can only be used in a specific scenario, and performs reasoning on specific samples. Therefore, for a model used in a specific scenario, when a scenario, an environment, or the like changes, performance of the model declines. For example, for a model used on a terminal device side, when an environment in which the terminal device is located changes, a characteristic of a sample changes, or a requirement of a UE changes, performance of the model declines. To avoid this case, a running effect of the model or performance of the model needs to be monitored. Further, the model may be managed based on a running effect of the model, for example, updating the model in a timely manner, so as to ensure efficient running of a communications system.

In some embodiments, the model may be generated in a core network or a third-party server. In this case, how to implement performance monitoring on the model on the terminal device side to ensure effective running of the model on the terminal device side is an urgent problem to be solved.

To resolve the foregoing problem, an embodiment of this application provides a wireless communications method. A network element (namely, a first network element) of a core network receives model performance monitoring result (namely, a performance monitoring result of a first model used by a terminal device) reported by the terminal device, which helps the core network or a third-party server to monitor performance of a model provided by the core network or the third-party server, thereby ensuring communication quality of a communications system.

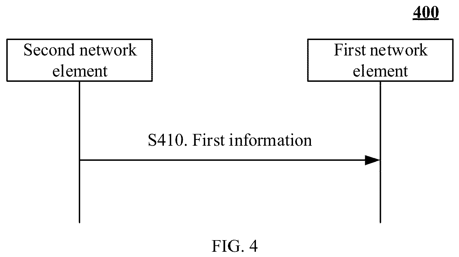

With reference to FIG. 4 to FIG. 6, the following describes in detail a wireless communication method provided in embodiments of this application.

FIG. 4 is a schematic flowchart of a communication method according to an embodiment of this application. The method shown in FIG. 4 may include step S410. The following describes this step in detail.

In step S410, a first network element receives first information reported by a second network element. The first information may be used for indicating a performance monitoring result of a first model.

In some embodiments, the first network element may be one of the core network elements described above. For example, the first network element may be a PCF responsible for formulating related policies such as mobility management, session management, and charging for a terminal device. For another example, the first network element may be an NEF responsible for capability exposure. For another example, the first network element may be an NWDAF responsible for data analysis.

The first model may be a model deployed on a terminal device side, or the first model may be a model used by the terminal device. The first model mentioned herein may be, for example, an AI/ML model. In some embodiments, the first model may be used to compress and decompress channel state information. In some other embodiments, the first model may be used for beam prediction, such as prediction on beam information in time/spatial domain. In still some other embodiments, the first model may be configured to predict location information of the terminal device.

As described above, the performance monitoring of the model may include one or more of the following aspects: accuracy of model reasoning, time for model reasoning, an impact of the model on performance of a communications system, a size of the model, robustness of the model, generalization of the model, or the like.

In some embodiments, the performance monitoring result of the first model may include a monitoring result of one or more aspects of the foregoing aspects. For example, the performance monitoring result of the first model may include a monitoring result of the accuracy of model reasoning of the first model, or may include a monitoring result of the time for model reasoning of the first model. For another example, the performance monitoring result of the first model may include a monitoring result of the accuracy of model reasoning and a monitoring result of an impact of the first model on performance of a communications system. The performance monitoring result of the first model mentioned herein is merely provided by way of example, which is not limited in this application.

In some embodiments, the first information may indicate model information of the first model, such as a model identity (identify, ID), so as to associate a performance monitoring result with a corresponding model.

Performance of the first model may vary in different scenarios and environments. For example, the performance of the first model may vary in different time periods or when the first model is used in different locations. Therefore, the first information may indicate performance of the first model in a monitoring time period and/or a location where the performance of the first model is generated.

In some embodiments, the first information may indicate all monitoring results or monitoring data of the performance of the first model. In some other embodiments, the first information may indicate a threshold reached by the performance of the first model, or a preset condition.

The threshold and the preset condition mentioned herein may be used to determine a change of running performance of the first model. For example, the threshold reached by the performance of the first model may be a threshold corresponding to one type of performance of the first model. For another example, the threshold reached by the performance of the first model may be an aggregation threshold corresponding to a plurality of types of model performance of the first model. In an example, the aggregation threshold may correspond to an operation result of the plurality of types of model performance of the first model, that is, the aggregation threshold may be a threshold of the operation result of the plurality of types of model performance of the first model.

Based on the threshold reached by the performance of the first model, processing such as updating of the first model may be performed in a timely manner when running performance of the first model declines, so as to ensure communication quality of the communications system. In addition, by using the first information to indicate the threshold reached by the performance of the first model, a resource for transmitting the first information can be saved.

The first information may indicate one or more of the foregoing information of the first model. For example, the first information may indicate an identity of the first model and a threshold reached by the performance of the first model in a monitoring time period, or may indicate a threshold reached by the performance of the first model and a location at which the performance is generated. For another example, the first information may indicate an identity of the first model, performance of the first model in a monitoring time period, and a location at which the performance is generated.

A performance monitoring result of the first model may be generally monitored by a terminal device that uses the first model. Therefore, in some embodiments, the second network element may be the terminal device, that is, the first information may be directly reported by the terminal device. In some other embodiments, the first information may alternatively be reported indirectly by the terminal device through another device. For example, the first information may be indirectly reported by a terminal device in a core network through a session management network element, that is, the second network element may be the session management network element.

Generally, the performance of the model is monitored by a provider of the model, or a generator of the model. For the first model being generated by a network element of the core network or a third-party server, that is, in a case that the first model is provided by the network element of the core network or the third-party server, the network element of the core network or the third-party server needs to monitor the performance of the first model. Therefore, in some embodiments, the network element of the core network or the third-party server may receive the performance monitoring result of the first model through the first network element in the core network.

In embodiments of this application, by using the first network element in the core network as a bridge, the network element of the core network or the third-party server may acquire the performance monitoring result of the first model, so as to implement performance monitoring on the first model on a terminal device side performed by the network element of the core network or the third-party server, thereby helping to ensure communication quality of a communications system.

Based on the first network element, the network element of the core network or the third-party server may perform performance monitoring on the first model in a plurality of modes. Alternatively, there may be a plurality of modes of carrying the first information. For example, the first information may be carried in control plane signalling or user plane data of a core network.

In some embodiments, performance monitoring of the first model may be performed by using a control plane, or information (namely, the first information) used for indicating the performance monitoring result of the first model used by the terminal device is carried in the control plane signalling. For example, the first information may be carried in control signalling in communications between the first network element and the terminal device. In this way, the terminal device may directly communicate with the first network element, for example, the first network element reports the first information, which is easy to implement and easy to use. In some other embodiments, performance monitoring of the first model may be performed by using user plane data, in other words, the first information is carried in the user plane data. For example, the first information may be carried in data in communications between a user plane function and the terminal device. In a case that a data volume of the performance monitoring result of the model is relatively large, the first information being carried in the user plane data helps to save control signalling.

In some embodiments, before the first network element receives the first information reported by the second network element, the method shown in FIG. 4 may further include step S420.

In step S420, the first network element transmits a first policy to the second network element. The first policy may be related to performance monitoring of the first model.

In an implementation, the first policy may be used for indicating content of performance monitoring of the first model. For example, the first policy may be used for indicating model information of the first model, for example, a model ID of the first model, or may be used for indicating parameter information associated with performance monitoring of the first model, for example, one or more of the following parameter information of the first model: model performance to be monitored; a threshold for model performance to be monitored; a monitoring time period; or a monitoring location.

The performance of the first model may include a plurality of aspects, or may include a plurality of types of performance parameters. Thus, the first policy may include the model performance to be monitored, which indicates what performance of the first model is to be monitored.

The performance of the first model may be different during different time periods in a model running process. The performance of the first model may be monitored in different time periods according to different requirements. Therefore, the first policy may include a monitoring time period, which indicates a time for performing performance monitoring on the first model. For example, if a user or a model provider is more concerned about running performance of the first model in a first time period, the first policy may include the first time period. For another example, if performance of the first model in a second time period may affect performance of a communications system, the first policy may include the second time period.

If a running location of the first model changes, or a location of a device using the first model changes, the performance of the first model may change. The performance of the first model may be monitored at different locations according to different requirements. Therefore, the first policy may include a monitoring location. For example, when a device using a first model is located at a cell edge, performance of the first model is poor. In this case, the first policy may include a location of the cell edge. For another example, if a user or a model provider is more concerned about performance of the first model when a device using the first model is located at a location of a cell center, the first policy may include the location of the cell center.

In some embodiments, the first policy may further include a threshold of model performance to be monitored of the first model. Whether the model performance to be monitored meets a use requirement may be determined depending on the threshold for the model performance to be monitored. For example, when the model performance to be monitored is higher than or lower than the threshold for the model performance to be monitored, it is considered that the model performance to be monitored meets or does not meet the requirement. If accuracy of model reasoning of the first model is lower than a first threshold, it is considered that the accuracy of model reasoning of the first model does not meet a use requirement. In this case, the first policy may include the first threshold of the accuracy of model reasoning of the first model.

The threshold may be a threshold corresponding to one model parameter of the first model, or may be an aggregation threshold corresponding to a plurality of model parameters mentioned above. In some cases, the first policy may further include a plurality of thresholds of the model performance to be monitored of the first model. For example, performance of the first model reaching different thresholds may indicate a plurality of running statuses of the first model.

In another implementation, the first policy may be used for indicating a mode in which the terminal device reports the first information.

For example, the first policy may be used for indicating reporting all monitoring results or monitoring data of performance to be monitored of the first model. In this way, the model provider can obtain detailed running data of the first model, which helps the model provider to fully understand a running status of the first model and optimize the model, thereby improving rationality of using the first model.

For another example, the first policy may be used for indicating a threshold reached by the performance of the first model. In other words, the first policy may be used for indicating reporting a monitoring result that reaches the threshold in all monitoring results of performance to be monitored of the first model. In an example, when there are a plurality of thresholds of the first model, the first policy may be used for indicating reporting performance of the first model that reaches a threshold and the threshold reached by the performance. In this way, the model provider may perform, in a timely manner, management on the first model, such as model update, based on the threshold reached by the performance of the first model, so as to ensure communication quality of a system. In addition, by reporting the performance of the first model that reaches the threshold and/or the threshold reached by the performance of the first model, transmission resources can be saved. For an implementation in which model performance monitoring is performed by using a control plane, such mode of reporting helps to save control plane signalling.

There may be a plurality of ways for the first policy to indicate the mode in which the terminal device reports the first information.

In an implementation, the first policy may explicitly indicate a mode in which the terminal device reports the first information. For example, the first policy includes the mode in which the terminal device reports the first information, which is easy to implement. For example, the first policy may include one bit, and different values of the bit may indicate different modes in which the terminal device reports the first information.

In another implementation, the first policy may implicitly indicate a mode in which the terminal device reports the first information. For example, the mode in which the terminal device reports the first information may be implicitly indicated by using parameter information related to performance monitoring of the first model. If the parameter information, related to performance monitoring of the first model, indicated by the first policy includes information associated with the threshold for the model performance to be monitored, the first policy may indicate reporting a threshold reached by the performance of the first model. In an example, the first policy may include the threshold of model performance to be monitored of the first model and one or more of the following information of the first model: a model identity; model performance to be monitored; a monitoring time period; or a monitoring location. If the parameter information, related to performance monitoring of the first model, indicated by the first policy does not include information associated with the threshold for the model performance to be monitored, the first policy may indicate reporting all monitoring results of performance to be monitored of the first model. In an example, the first policy may include one or more of the following information of the first model: a model identity; model performance to be monitored; a monitoring time period; or a monitoring location. The first policy implicitly indicating the mode in which the terminal device reports the first information helps to save resources.

If the second network element is a session management network element, the first policy may be included in a policy and charging control (policy and charging control, PCC) rule and transmitted to the session management network element by the first network element.

In some embodiments, before the first network element receives the first information reported by the second network element, the method shown in FIG. 4 may further include step S430.

In step S430, the first network element receives a request message (also referred to as a first request message) transmitted by a third network element. The request message may be used for requesting to perform performance monitoring on the first model.

The third network element may be a provider of the first model, or a device that generates the first model, or the third network element may be a device that can communicate with a provider of the first model. For example, the third network element may be a network element used for generating a model in the core network, such as a network function (network function, NF), that is, the first model may be generated by the third network element, or the first model may be provided by the third network element. For another example, the third network element may be an application function in the core network. In an example, if the first model is provided or generated by a third-party server, the third network element may be an application function in the core network. The third-party server may access the core network by using the application function in the core network.

In some embodiments, the first request message may include model information of the first model, such as a model ID. In some other embodiments, the first request message may further include model monitoring content, such as performance of a model to be monitored.

Performance of the first model may vary in different scenarios and environments. For example, the performance of the first model may vary in different time periods or when the first model is used in different locations. Considering different use requirements, the first request message may further include a monitoring time period and a monitoring location that correspond to the performance to be monitored of the first model.

In some embodiments, the first request message may further include a mode of reporting a performance monitoring result of the first model. For example, the first request message may be used for requesting to report all monitoring results of performance of the first model, which helps to fully understand a running status of the first model, so as to optimize the model. For another example, the first request message may be used for requesting to report a monitoring result that reaches a threshold in performance monitoring results of the first model, which helps to save transmission resources.

The first request message may directly include the mode of reporting the performance monitoring result of the first model, or may implicitly indicate the mode of reporting the performance monitoring result of the first model by using a parameter included in the first request message and related to the performance of the first model. For example, if the first request message includes the threshold for the model performance to be monitored of the first model, the first request message may be used for requesting to report the monitoring result that reaches the threshold in the performance monitoring results of the first model, for example, the threshold reached by the model performance to be monitored and the model performance that reaches the threshold. For another example, when the first request message does not include the threshold for the model performance to be monitored of the first model, the first request message may be used for requesting to report all monitoring results of the performance of the first model.

The threshold mentioned herein may be one or more of a threshold corresponding to one type of performance of the first model, one threshold of a plurality of thresholds corresponding to one type of performance, or an aggregation threshold corresponding to a plurality of types of performance.

In other words, the first request message may include one or more of the following information of the first model: a model identity; model performance to be monitored; a threshold for model performance to be monitored; a monitoring time period; or a monitoring location.

In some embodiments, the method shown in FIG. 4 may further include step S440.

In step S440, the first network element transmits a response message to the request message (namely, the first request message mentioned above) to the third network element.

The response message may include a monitoring result of the first model, such as the first information. For example, the response message may include one or more of the following information of the first model: a model identity; performance of the first model in a monitoring time period; a threshold reached by the performance of the first model; or a location where the performance of the first model is generated.

The response message may further include indication information indicating whether the request is completed. If performance monitoring of the first model fails or a performance monitoring result becomes invalid, the response message may further include indication information indicating that the request is not completed. For example, it may be determined, based on the indication information indicating that the request is not completed, whether to perform model monitoring of the first model again, or adjust a model monitoring parameter of the first model. If performance monitoring of the first model succeeds, or a performance monitoring result is valid, the response message may include indication information indicating that the request has been completed. For example, the first model may be managed, for example, continue to be used, updated, or disabled, based on a performance monitoring result of the first model according to the indication information indicating that the request has been completed.

There may be one or more response messages to the first request message. If there is one response message to the first request message, the response message is transmitted when model monitoring requested in the request message is completed, or a monitoring result of model performance requested in the request is acquired. If there are a plurality of response messages to the first request message, regardless of whether all monitoring content requested in the first request message is completed, when a model monitoring result reaches a threshold of model performance to be monitored in the request, one response message to the first request message is transmitted. In this way, when some key parameters of the first model reach a threshold, the model may be managed in time, for example, updated and disabled, which helps to improve communication quality of the system.

As mentioned above, if the first information is carried in data on a user plane, the first network element may receive the first information reported by the session management network element. In an implementation, the session management network element of the core network may receive, by using the user plane function network element, the first information reported by the terminal device. For example, the user plane function network element may receive the first information reported by the terminal device, and report the received first information to the session management network element. The first information may be used for indicating a performance monitoring result of the first model used by the terminal device.

The first information may be used for indicating one or more of the following information of the first model: a model identity; performance of the first model in a monitoring time period; a threshold reached by the performance of the first model; or a location where the performance of the first model is generated. The foregoing information may be the same as the information described in step S410. For brevity, details are not described herein again.

In some embodiments, the first information may be carried in a header of a first data packet received by the user plane function network element from the terminal device, so as to implement model performance monitoring based on user plane data.

In some embodiments, before the user plane function network element receives the first information reported by the terminal device, the user plane function network element may further receive a request message (which may be referred to as a second request message) transmitted by the session management network element. For example, the second request message may be determined based on the first policy (the first policy described above in step S420).

The second request message mentioned herein may be related to performance monitoring of the first model. For example, the second request message may include one or more of the following information of the first model: a model identity; model performance to be monitored; a threshold for model performance to be monitored; a monitoring time period; or a monitoring location. For the foregoing information of the first model, reference may be made to the foregoing description. For simplicity, details are not described herein again.

For another example, the second request message may include a mode in which the terminal device reports the first information. The mode in which the terminal device reports the first information may be one or more of the modes of reporting the first information indicated in the first policy (the first policy mentioned above in step S420). In an example, the mode of reporting the first information may include reporting all monitoring results of performance to be monitored of the first model, or may include reporting a threshold reached by performance of the first model. The mode of reporting the first information may be implicitly indicated by using parameter information associated with performance of the first model in the second request message, or may be directly indicated by using the second request message, which is referred to as being explicitly indicated. For brevity, details are not described herein again.

The following describes embodiments of this application in detail from a perspective of a terminal device.

In some embodiments, the terminal device may report first information to a network element of a core network. The network element of the core network mentioned herein may be the first network element mentioned above, or may be a user plane function network element. For example, the terminal device may report the first information to a session management function network element through the user plane function network element, and the terminal device may alternatively report the first information to the first network element through the user plane function network element and the session management function network element.

The first information may be used for indicating a performance monitoring result of a first model used by the terminal device. For example, the first information may be used for indicating one or more of the following information of the first model: a model identity; performance of the first model in a monitoring time period; a threshold reached by the performance of the first model; or a location where the performance of the first model is generated. For the foregoing information of the first model, reference may be made to the foregoing description. For simplicity, details are not described herein again.

There may be a plurality of modes of carrying the first information. For example, the first information may be carried in control plane signalling of the core network. For another example, the first information may be carried in user plane data of the core network.

If the first information is carried in the control plane signalling of the core network, before the terminal device reports the first information to the network element of the core network, the terminal device may further receive a first policy transmitted by the first network element, where the first policy is related to performance monitoring of the first model. The first policy mentioned herein is the same as the first policy mentioned above in the step S420. For brevity, details are not described herein again.

If the first information is carried in the user plane data of the core network, before the terminal device reports the first information to the network element of the core network, the terminal device may further accept a request message (which may be referred to as a third request message) transmitted by the session management network element. The third request message may be used for requesting the terminal device to perform performance monitoring on the first model. For example, the third request message may be determined based on the first policy (the first policy described above in step S420).

In some embodiments, the third request message may include one or more of the following information of the first model: a model identity; model performance to be monitored; a threshold for model performance to be monitored; a monitoring time period; or a monitoring location. For the foregoing information of the first model, reference may be made to the foregoing description. For simplicity, details are not described herein again.

The third request message may include a mode in which the terminal device reports the first information. The mode in which the terminal device reports the first information may be one or more of the modes of reporting the first information indicated in the first policy. In an example, the mode of reporting the first information may include reporting all monitoring results of performance to be monitored of the first model, or may include reporting a threshold reached by performance of the first model. The mode of reporting the first information may be implicitly indicated by using parameter information associated with performance of the first model in the third request message, or may be directly indicated by using the third request message, which is referred to as being explicitly indicated. For brevity, details are not described herein again.

It should be noted that, content included in the third request message of the session management network element received by the terminal device may be the same as or different from content included in the second request message of the session management network element received by the user plane function network element. For example, the third request message may not include the threshold for the model performance to be monitored, while the second request message may include the threshold for the model performance to be monitored. For another example, both the second request message and the third request message may include the threshold for the model performance to be monitored, or neither the second request message nor the third request message may include the threshold for the model performance to be monitored.

It should be noted that, if the first request message received by the first network element and transmitted by the third network element includes the threshold for the model performance to be monitored, the first policy may include the threshold for the model performance to be monitored, or may not include the threshold for the model performance to be monitored.

If the terminal device reports all monitoring results of performance to be monitored of the first model, but the third network element requests the first network element for the threshold reached by the performance of the first model, all monitoring results of performance of the first model need to be processed, for example, determining whether the performance of the first model reaches the threshold. In an implementation, the first network element may determine whether the performance of the first model reaches the threshold. In another implementation, the user plane function network element may determine whether the performance of the first model reaches the threshold.

In addition, in the foregoing determining process, at least one of the first network element or the user plane function network element may determine, based on a monitoring time period, whether a monitoring result reported by the terminal device is valid.

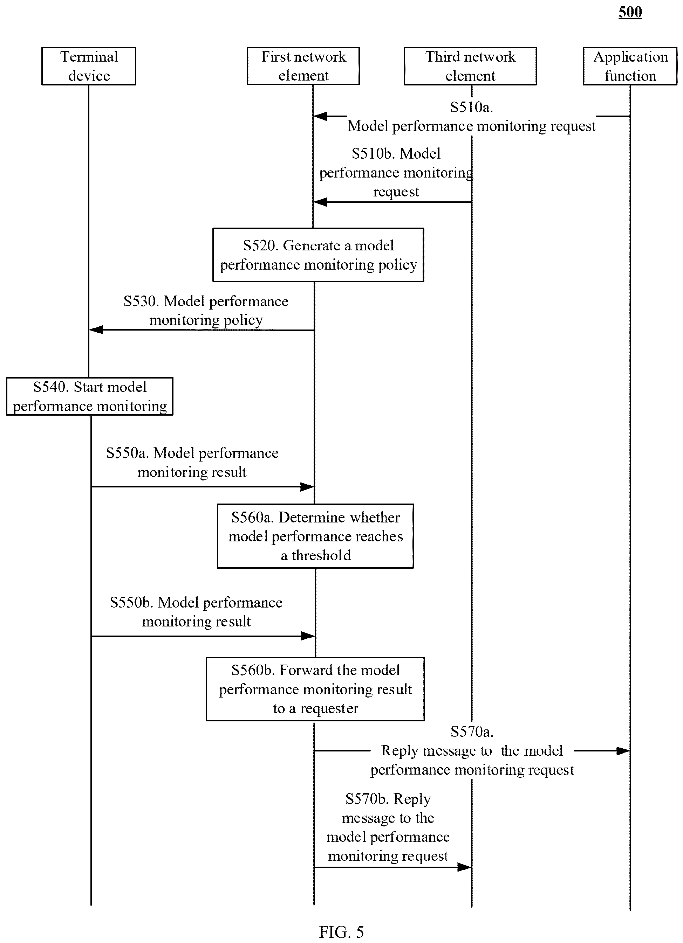

The following describes a method for performing model performance monitoring by using a control plane in detail with reference to FIG. 5 and by using an example in which the first network element is a policy management function of the core network and the second network element is the terminal device.

FIG. 5 is a schematic diagram of a method for performing model monitoring by using a control plane according to an embodiment of this application. The method shown in FIG. 5 may include steps S510a to S570b.

In step S510a, an application function of a core network transmits a model performance monitoring request to a first network element.

When a model provider, such as a third-party server, expects to monitor performance of a model used on a terminal device side, the model provider may transmit the model performance monitoring request to the first network element through the application function. The request may include an ID of the model to be monitored, a type of model performance to be monitored, a time period in which model performance monitoring is enabled, a monitoring location, and a threshold for model performance required to be reported.

In step S510b, a third network element transmits a model performance monitoring request to the first network element.

When the model provider, such as a network element (the third network element) in the core network, expects to monitor performance of the model used on the terminal device side, the model provider may transmit the model performance monitoring request to the first network element. The request may include an ID of the model to be monitored, a type of model performance to be monitored, a time period in which model performance monitoring is enabled, a monitoring location, and a threshold for model performance required to be reported.

In step S520, the first network element generates a model performance monitoring policy (namely, the first policy mentioned above).

The first network element may generate the model performance monitoring policy based on the model performance monitoring request. The policy may include a parameter of a model to be monitored included in the request in step S510a or step S510b.

In step S530, the first network element transmits the model performance monitoring policy to a terminal device.

In step S540, the terminal device starts model performance monitoring.

Based on the received model performance monitoring policy, the terminal device may start model performance monitoring in the time period and/or the monitoring location indicated in the policy.

If the model performance monitoring policy in step S530 does not include a model performance threshold parameter, S550a may be performed. If the model performance monitoring policy in step S530 includes a model performance threshold parameter, S550b may be performed.

In step S550a, the terminal device reports a model performance monitoring result to the first network element.

The terminal device may report all model performance monitoring results to the first network element. A performance result of the model may include, for example, the model ID, and performance of a current model.

After reporting the model performance monitoring result to the first network element, the terminal device may perform step S560a.

In step S550b, the terminal device reports a model performance monitoring result to the first network element.

The terminal device may determine whether the model performance monitoring result reaches a threshold for model performance. When the model performance reaches the threshold, the terminal device may report a model performance monitoring result that reaches the threshold to the first network element. The performance result of the model may include, for example, the model ID, performance of a current model, and a threshold reached by the model performance.

In addition, the terminal device may determine, based on information about the time period of model performance monitoring, whether the model performance monitoring result is valid, that is, only the model performance monitoring result generated in the monitoring time period and reaching the threshold is considered valid. The terminal device may report a valid monitoring result to the first network element. Otherwise, the terminal device may reply with a failure to the model performance monitoring request.

After reporting the model performance monitoring result to the first network element, the terminal device may perform step S560b.

In step S560a, the first network element determines whether model performance reaches a threshold.

The first network element may compare the model performance reported by the terminal device with the threshold received in step S510a or step S510b, to determine whether the model performance reaches the threshold.

In addition, the first network element may determine, based on the information about the time period of model performance monitoring, whether a received reply is valid, that is, only a model performance monitoring result received in the time period is considered valid. Otherwise, the first network element replies with a failure to the model performance monitoring request.

In step S560b, the first network element forwards the model performance monitoring result reported by the terminal device to a requester.

If the model monitoring request is initiated by the application function of the core network, step S570a may be further performed. If the model monitoring request is initiated by the third network element of the core network, step S570b may be further performed.

In step S570a, the first network element transmits a reply message (namely, the response message mentioned above) to the model performance monitoring request to the application function.

The message may include a model ID, performance of the model in a monitoring time period, a threshold reached by the model performance, a location where the model performance is generated, and the like.

In step S570b, the first network element transmits a reply message to the model performance monitoring request to the third network element.

The message may include a model ID, performance of the model in a monitoring time period, a threshold reached by the model performance, a location where the model performance is generated, and the like.

It should be noted that in some cases, step S560b is the same as step S570b, and only step S570b may be performed.

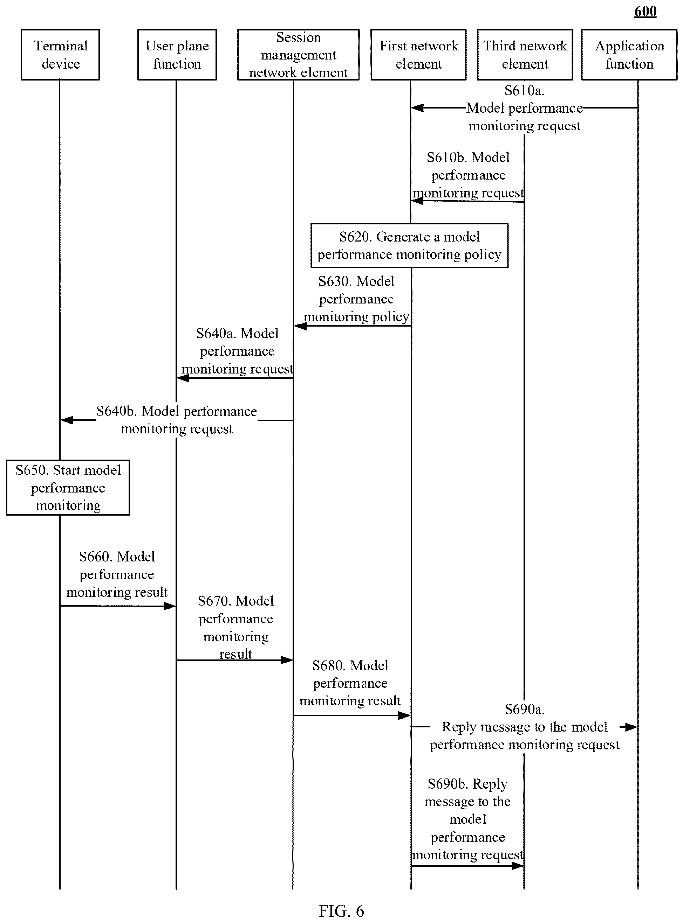

The following describes a method for performing model performance monitoring by using user plane data in detail with reference to FIG. 6 and by using an example in which the first network element is a policy management function of the core network and the second network element is an SMF.

FIG. 6 is a schematic diagram of a method for performing model monitoring by using user plane data according to an embodiment of this application. The method shown in FIG. 6 may include steps S610a to S690b.

In step S610a, an application function of a core network transmits a model performance monitoring request to a first network element.

When a model provider, such as a third-party server, expects to monitor performance of a model used on a terminal device side, the model provider may transmit the model performance monitoring request to the first network element through the application function. The request may include an ID of the model to be monitored, a type of model performance to be monitored, a time period in which model performance monitoring is enabled, a monitoring location, and a threshold for model performance required to be reported.

In step S610b, a third network element of the core network transmits a model performance monitoring request to the first network element.

When the model provider, such as a network element (the third network element) in the core network, expects to monitor performance of the model used on the terminal device side, the model provider may transmit the model performance monitoring request to the first network element. The request may include an ID of the model to be monitored, a type of model performance to be monitored, a time period in which model performance monitoring is enabled, a monitoring location, and a threshold for model performance required to be reported.

In step S620, the first network element generates a model performance monitoring policy (namely, the first policy mentioned above).

The first network element may generate the model performance monitoring policy based on the model performance monitoring request. The policy may include a parameter of a model to be monitored included in the request in step S610a or step S610b.

In step S630, the first network element transmits the model monitoring policy to a session management network element.

For example, the model performance monitoring policy may be included in a PCC rule and transmitted to the session management network element by the first network element.

In step S640a, the session management network element transmits a model performance monitoring request to a user plane function.

For example, the session management network element may transmit the model performance monitoring request to the user plane function by using an N4 message. The request message may be determined based on the model performance monitoring policy in step S620.

In step S640b, the session management network element transmits a model performance monitoring request to a terminal device.

For example, the session management network element may transmit the model performance monitoring request to the terminal device by using an NAS message. The request message may be determined based on the model performance monitoring policy in step S620.

In some embodiments, content of the model performance monitoring request transmitted by the session management network element to the terminal device may be the same as or different from content of the model performance monitoring request transmitted to the user plane function.

In step S650, the terminal device starts model performance monitoring.

The terminal device may start model performance monitoring of the terminal device based on a parameter in the request received from the session management network element.

In step S660, the terminal device transmits a model performance monitoring result to the user plane function.

For example, the terminal device may add the model performance monitoring result to a header of an uplink data packet to transmit it to the user plane function. In an example, the header of the data packet may further include information such as a model ID, a time and/or a location for generating a monitoring result.

In step S670, the user plane function reports the model performance monitoring result to the session management network element.

First, the user plane function may obtain, by reading a parameter in the header, a model performance monitoring result reported by the terminal device.

If the model performance monitoring result reported by the terminal device is performance reaching a threshold, the user plane function may directly report the result to the session management network element. If the model performance monitoring result reported by the terminal device is not performance reaching a threshold, the user plane function may determine, based on the model performance monitoring request received from the session management network element, whether model performance reaches a threshold, and transmit the performance that reaches the threshold to the session management network element.

In step S680, the session management network element transmits the model performance monitoring result to the first network element.

In step S690a, the first network element transmits a reply message (namely, the response message mentioned above) to the model performance monitoring request to the application function.

The message may include the model ID, the performance of the model in the time period, the threshold reached by the model performance, the location where the model performance is generated, and the like.

In step S690b, the first network element transmits a reply message (namely, the response message mentioned above) to the model performance monitoring request to the third network element.

The message may include the model ID, the performance of the model in the time period, the threshold reached by the model performance, the location where the model performance is generated, and the like.

In embodiments of this application, the network element of the core network is used to collect performance parameters of the model used on the terminal device side, so as to help a model provider to monitor performance of the model on the terminal device. By using the control plane or the user plane, the collected model performance parameters are transmitted to the model provider, so that the model provider can update the model in time to ensure quality of a communications system. In addition, the network element of the core network serves as a centralized collection node using model IDs for identification, so that it is not necessary for each model provider to maintain a constant connection with the terminal device for each model, which can save signaling resources and improve efficiency.

The foregoing describes the method embodiments of this application in detail. The following describes apparatus embodiments of this application in detail. It should be understood that the descriptions of the method embodiments correspond to descriptions of the apparatus embodiments, and therefore, for parts that are not described in detail, reference may be made to the foregoing method embodiments.

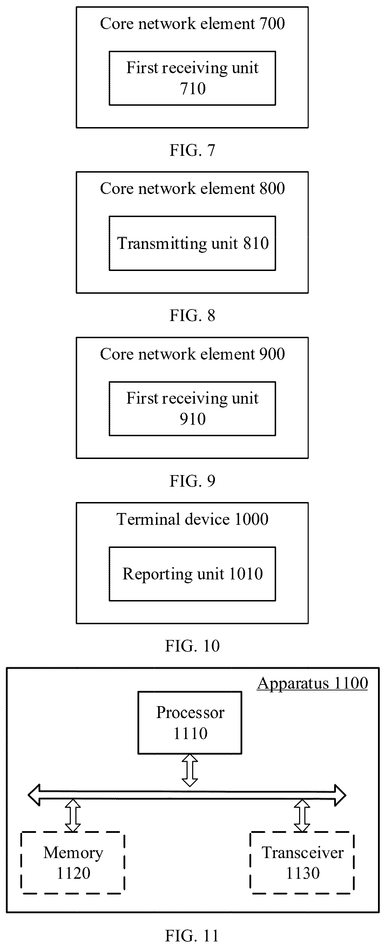

FIG. 7 is a schematic diagram of a structure of a core network element according to an embodiment of this application. A core network element 700 may be a first network element. The core network element 700 may include a first receiving unit 710.

The first receiving unit 710 is configured to receive first information reported by a second network element, where the first information is used for indicating a performance monitoring result of a first model used by a terminal device.

In some embodiments, the first information is carried in control plane signalling or user plane data of a core network.

In some embodiments, the core network element further includes a first transmitting unit, configured to transmit a first policy to the second network element before receiving the first information reported by the second network element, where the first policy is related to performance monitoring of the first model.

In some embodiments, the first policy is used for indicating parameter information related to the performance monitoring of the first model and/or a mode in which the terminal device reports the first information.

In some embodiments, the first policy includes one or more of the following information of the first model: a model identity; model performance to be monitored; a threshold for model performance to be monitored; a monitoring time period; or a monitoring location.

In some embodiments, the core network element further includes a second receiving unit, configured to receive a request message transmitted by a third network element before receiving the first information reported by the second network element, where the request message is used for requesting to perform performance monitoring on the first model.

In some embodiments, the core network element further includes a second transmitting unit, configured to transmit a response message to the request message to the third network element, where the response message includes the first information.

In some embodiments, the request message includes one or more of the following information of the first model: a model identity; model performance to be monitored; a threshold for model performance to be monitored; a monitoring time period; or a monitoring location.

In some embodiments, the third network element is a network element used for generating a model in a core network; and the third network element is an application function in the core network.

In some embodiments, the first information is used for indicating one or more of the following information of the first model: a model identity; performance of the first model in a monitoring time period; a threshold reached by the performance of the first model; or a location where the performance of the first model is generated.

In some embodiments, the core network element is a policy control network element in the core network.

FIG. 8 is a schematic diagram of a structure of a core network element according to an embodiment of this application. A core network element 800 may be a third network element. The core network element 800 may include a transmitting unit 810.

The transmitting unit 810 is configured to transmit a request message to a first network element, where the request message is used for requesting to perform performance monitoring on a first model used by a terminal device.

In some embodiments, the core network element further includes a receiving unit, configured to receive a response message to the request message, transmitted by the first network element, where the response message includes first information, and the first information is used for indicating a performance monitoring result of the first model.

In some embodiments, the first information includes one or more of the following information of the first model: a model identity; performance of the first model in a monitoring time period; a threshold reached by the performance of the first model; or a location where the performance of the first model is generated.

In some embodiments, the request message includes one or more of the following information of the first model: a model identity; model performance to be monitored; a threshold for model performance to be monitored; a monitoring time period; or a monitoring location.

In some embodiments, the core network element is a network element used for generating a model in a core network; or the core network element is an application function in the core network.

FIG. 9 is a schematic diagram of a structure of a core network element according to an embodiment of this application. A core network element 900 may be a user plane function network element of a core network. The core network element 900 may include a first receiving unit 910.

The first receiving unit 910 is configured to receive first information reported by a terminal device, where the first information is used for indicating a performance monitoring result of a first model used by the terminal device.

In some embodiments, the first information is carried in a header of a first data packet received by the core network element from the terminal device.

In some embodiments, the core network element further includes a second receiving unit, the second receiving unit is configured to receive a request message transmitted by a session management network element before receiving the first information reported by the terminal device, where the request message is related to performance monitoring of the first model.

In some embodiments, the request message includes one or more of the following information of the first model: a model identity; model performance to be monitored; a threshold for model performance to be monitored; a monitoring time period; or a monitoring location.

FIG. 10 is a schematic structural diagram of a terminal device according to an embodiment of this application. The terminal device 1000 may include a reporting unit 1010.

The reporting unit 1010 is configured to report first information to a network element of a core network, where the first information is used for indicating a performance monitoring result of a first model used by the terminal device.

In some embodiments, the first information is carried in control plane signalling or user plane data of the core network.

In some embodiments, the terminal device further includes a first receiving unit, where the first receiving unit is configured to receive a first policy transmitted by a first network element before reporting the first information to the network element of the core network, where the first policy is related to performance monitoring of the first model.

In some embodiments, the first policy is used for indicating parameter information related to the performance monitoring of the first model and/or a mode in which the terminal device reports the first information.

In some embodiments, the first policy includes one or more of the following information of the first model: a model identity; model performance to be monitored; a threshold for model performance to be monitored; a monitoring time period; or a monitoring location.

In some embodiments, if the first information is carried in the user plane data of the core network, the terminal device further includes a second receiving unit, configured to receive a request message transmitted by a session management network element before reporting the first information to the network element of the core network, where the request message is used for requesting the terminal device to perform performance monitoring on the first model.

In some embodiments, the request message includes one or more of the following information of the first model: a model identity; model performance to be monitored; a threshold for model performance to be monitored; a monitoring time period; or a monitoring location.

In some embodiments, the network element of the core network is a user plane function network element.

In some embodiments, the first information is carried in a header of a first data packet transmitted by the terminal device to the user plane function network element.

In some embodiments, the first information is used for indicating one or more of the following information of the first model: a model identity; performance of the first model in a monitoring time period; a threshold reached by the performance of the first model; or a location where the performance of the first model is generated.

FIG. 11 is a schematic structural diagram of an apparatus for communication according to an embodiment of this application. Dashed lines in FIG. 11 indicate that a unit or module is optional. The apparatus 1100 may be configured to implement the methods described in the foregoing method embodiments. The apparatus 1100 may be a chip, a terminal device, or a core network device.

The apparatus 1100 may include one or more processors 1110. The processor 1110 may support the apparatus 1100 in implementing the methods described in the foregoing method embodiments. The processor 1110 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1100 may further include one or more memories 1120. The memory 1120 stores a program, where the program may be executed by the processor 1110, to cause the processor 1110 to execute the methods described in the method embodiments. The memory 1120 may be separated from or integrated into the processor 1110.

The apparatus 1100 may further include a transceiver 1130. The processor 1110 may communicate with another device or chip by using the transceiver 1130. For example, the processor 1110 may transmit data to and receive data from another device or chip through the transceiver 1130.

An embodiment of this application further provides a computer-readable storage medium for storing a program. The computer-readable storage medium may be applied to the core network element and/or terminal device provided in embodiments of this application, and the program causes a computer to execute the methods performed by the core network element and/or terminal device in various embodiments of this application.

An embodiment of this application further provides a computer program product. The computer program product includes a program. The computer program product may be applied to the core network element and/or terminal device provided in embodiments of this application, and the program causes a computer to execute the methods performed by the core network element and/or terminal device in various embodiments of this application.

An embodiment of this application further provides a computer program. The computer program may be applied to the core network element and/or terminal device provided in embodiments of this application, and the computer program causes a computer to execute the methods performed by the core network element and/or terminal device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a first network element, first information reported by a second network element, wherein the first information is used for indicating a performance monitoring result of a first model used by a terminal device.

2. The method according to claim 1, wherein the first information is carried in control plane signalling or user plane data of a core network.

3. The method according to claim 1 or 2, wherein before the receiving, by the first network element, the first information reported by the second network element, the method further comprises:
transmitting, by the first network element, a first policy to the second network element, wherein the first policy is related to performance monitoring of the first model.

4. The method according to claim 3, wherein the first policy is used for indicating parameter information related to the performance monitoring of the first model and/or a mode in which the second network element reports the first information.

5. The method according to claim 3 or 4, wherein the first policy comprises one or more of following information of the first model:
a model identity;
model performance to be monitored;
a threshold for model performance to be monitored;
a monitoring time period; or
a monitoring location.

6. The method according to any one of claims 1 to 5, wherein before the receiving, by the first network element, the first information reported by the second network element, the method further comprises:
receiving, by the first network element, a request message transmitted by a third network element, wherein the request message is used for requesting to perform performance monitoring on the first model.

7. The method according to claim 6, wherein the method further comprises:
transmitting, by the first network element, a response message to the request message to the third network element, wherein the response message comprises the first information.

8. The method according to claim 6 or 7, wherein the request message comprises one or more of following information of the first model:
a model identity;
model performance to be monitored;
a threshold for model performance to be monitored;
a monitoring time period; or
a monitoring location.

9. The method according to any one of claims 6 to 8, wherein the third network element is a network element used for generating a model in the core network; or the third network element is an application function in the core network.

10. The method according to any one of claims 1 to 9, wherein the first information is used for indicating one or more of following information of the first model:
a model identity;
performance of the first model in a monitoring time period;
a threshold reached by the performance of the first model; or
a location where the performance of the first model is generated.

11. The method according to any one of claims 1 to 10, wherein the second network element is the terminal device or a session management network element.

12. The method according to any one of claims 1 to 11, wherein the first network element is a policy control network element in a core network.

13. A wireless communication method, comprising:
transmitting, by a third network element, a request message to a first network element, wherein the request message is used for requesting to perform performance monitoring on a first model used by a terminal device.

14. The method according to claim 13, wherein the method further comprises:
receiving, by the third network element, a response message to the request message, transmitted by the first network element, wherein the response message comprises first information, and the first information is used for indicating a performance monitoring result of the first model.

15. The method according to claim 14, wherein the first information comprises one or more of following information of the first model:
a model identity;
performance of the first model in a monitoring time period;
a threshold reached by the performance of the first model; or
a location where the performance of the first model is generated.

16. The method according to any one of claims 13 to 15, wherein the request message comprises one or more of the following information of the first model:
a model identity;
model performance to be monitored;
a threshold for model performance to be monitored;
a monitoring time period; or
a monitoring location.

17. The method according to any one of claims 13 to 16, wherein the third network element is a network element used for generating a model in a core network; or the third network element is an application function in the core network.

18. A wireless communication method, comprising:
receiving, by a user plane function network element, first information reported by a terminal device, wherein the first information is used for indicating a performance monitoring result of a first model used by the terminal device.

19. The method according to claim 18, wherein the first information is carried in a header of a first data packet received by the user plane function network element from the terminal device.

20. The method according to claim 18 or 19, wherein before the receiving, by the user plane function network element, the first information reported by the terminal device, the method further comprises:
receiving, by the user plane function network element, a request message transmitted by a session management network element, wherein the request message is related to performance monitoring of the first model.

21. The method according to claim 20, wherein the request message comprises one or more of following information of the first model:
a model identity;
model performance to be monitored;
a threshold for model performance to be monitored;
a monitoring time period; or
a monitoring location.

22. A wireless communication method, comprising:
reporting, by a terminal device, first information to a network element of a core network, wherein the first information is used for indicating a performance monitoring result of a first model used by the terminal device.

23. The method according to claim 22, wherein the first information is carried in control plane signalling or user plane data of the core network.

24. The method according to claim 23, wherein in a case that the first information is carried in the control plane signalling of the core network, before the reporting, by the terminal device, the first information to the network element of the core network, the method further comprises:
receiving, by the terminal device, a first policy transmitted by a first network element, wherein the first policy is related to performance monitoring of the first model.

25. The method according to claim 24, wherein the first policy is used for indicating parameter information related to the performance monitoring of the first model and/or a mode in which the terminal device reports the first information.

26. The method according to claim 24 or 25, wherein the first policy comprises one or more of following information of the first model:
a model identity;
model performance to be monitored;
a threshold for model performance to be monitored;
a monitoring time period; or
a monitoring location.

27. The method according to claim 23, wherein in a case that the first information is carried in the user plane data of the core network, before the reporting, by the terminal device, the first information to the network element of the core network, the method further comprises:
receiving, by the terminal device, a request message transmitted by a session management network element, wherein the request message is used for requesting the terminal device to perform performance monitoring on the first model.

28. The method according to claim 27, wherein the request message comprises one or more of following information of the first model:
a model identity;
model performance to be monitored;
a threshold for model performance to be monitored;
a monitoring time period; or
a monitoring location.

29. The method according to claim 23, wherein the network element of the core network is a user plane function network element.

30. The method according to claim 29, wherein the first information is carried in a header of a first data packet transmitted by the terminal device to the user plane function network element.

31. The method according to any one of claims 22 to 30, wherein the first information is used for indicating one or more of following information of the first model:
a model identity;
performance of the first model in a monitoring time period;
a threshold reached by the performance of the first model; or
a location where the performance of the first model is generated.

32. A core network element, wherein the core network element is a first network element, and the core network element comprises:
a first receiving unit, configured to receive first information reported by a second network element, wherein the first information is used for indicating a performance monitoring result of a first model used by a terminal device.

33. The core network element according to claim 32, wherein the first information is carried in control plane signalling or user plane data of a core network.

34. The core network element according to claim 32 or 33, wherein the core network element further comprises:
a first transmitting unit, configured to transmit a first policy to the second network element before receiving the first information reported by the second network element, wherein the first policy is related to performance monitoring of the first model.

35. The core network element according to claim 34, wherein the first policy is used for indicating parameter information related to performance monitoring of the first model and/or a mode in which the second network element reports the first information.

36. The core network element according to claim 34 or 35, wherein the first policy comprises one or more of following information of the first model:
a model identity;
model performance to be monitored;
a threshold for model performance to be monitored;
a monitoring time period; or
a monitoring location.

37. The core network element according to any one of claims 32 to 36, wherein the core network element further comprises:
a second receiving unit, configured to receive a request message transmitted by a third network element before receiving the first information reported by the second network element, wherein the request message is used for requesting to perform performance monitoring on the first model.

38. The core network element according to claim 37, wherein the core network element further comprises:
a second transmitting unit, configured to transmit a response message to the request message to the third network element, wherein the response message comprises the first information.

39. The core network element according to claim 37 or 38, wherein the request message comprises one or more of following information of the first model:
a model identity;
model performance to be monitored;
a threshold for model performance to be monitored;
a monitoring time period; or
a monitoring location.

40. The core network element according to any one of claims 37 to 39, wherein the third network element is a network element used for generating a model in the core network; or the third network element is an application function in the core network.

41. The core network element according to any one of claims 32 to 40, wherein the first information is used for indicating one or more of following information of the first model:
a model identity;
performance of the first model in a monitoring time period;
a threshold reached by the performance of the first model; or
a location where the performance of the first model is generated.

42. The core network element according to any one of claims 32 to 41, wherein the second network element is the terminal device or a session management network element.

43. The core network element according to any one of claims 32 to 42, wherein the first network element is a policy control network element in a core network.

44. A core network element, wherein the core network element is a third network element, and the core network element comprises:
a transmitting unit, configured to transmit a request message to a first network element, wherein the request message is used for requesting to perform performance monitoring on a first model used by a terminal device.

45. The core network element according to claim 44, wherein the core network element further comprises:
a receiving unit, configured to receive a response message to the request message, transmitted by the first network element, wherein the response message comprises first information, and the first information is used for indicating a performance monitoring result of the first model.

46. The core network element according to claim 45, wherein the first information comprises one or more of following information of the first model:
a model identity;
performance of the first model in a monitoring time period;
a threshold reached by the performance of the first model; or
a location where the performance of the first model is generated.

47. The core network element according to any one of claims 44 to 46, wherein the request message comprises one or more of following information of the first model:
a model identity;
model performance to be monitored;
a threshold for model performance to be monitored;
a monitoring time period; or
a monitoring location.

48. The core network element according to any one of claims 44 to 47, wherein the core network element is a network element used for generating a model in a core network; or the core network element is an application function in the core network.

49. A core network element, wherein the core network element is a user plane function network element, and the core network element comprises:
a first receiving unit, configured to receive first information reported by a terminal device, wherein the first information is used for indicating a performance monitoring result of a first model used by the terminal device.

50. The core network element according to claim 49, wherein the first information is carried in a header of a first data packet received by the user plane function network element from the terminal device.

51. The core network element according to claim 49 or 50, wherein the core network element further comprises:
a second receiving unit, configured to receive a request message transmitted by a session management network element before receiving the first information reported by the terminal device, wherein the request message is related to performance monitoring of the first model.

52. The core network element according to claim 51, wherein the request message comprises one or more of following information of the first model:
a model identity;
model performance to be monitored;
a threshold for model performance to be monitored;
a monitoring time period; or
a monitoring location.

53. A terminal device, comprising:
a reporting unit, configured to report first information to a network element of a core network, wherein the first information is used for indicating a performance monitoring result of a first model used by the terminal device.

54. The terminal device according to claim 53, wherein the first information is carried in control plane signalling or user plane data of the core network.

55. The terminal device according to claim 54, wherein in a case that the first information is carried in the control plane signalling of the core network, the terminal device further comprises:
a first receiving unit, configured to receive a first policy transmitted by a first network element before reporting the first information to the network element of the core network, wherein the first policy is related to performance monitoring of the first model.

56. The terminal device according to claim 55, wherein the first policy is used for indicating parameter information related to performance monitoring of the first model and/or a mode in which the terminal device reports the first information.

57. The terminal device according to claim 55 or 56, wherein the first policy comprises one or more of following information of the first model:
a model identity;
model performance to be monitored;
a threshold for model performance to be monitored;
a monitoring time period; or
a monitoring location.

58. The terminal device according to claim 54, wherein in a case that the first information is carried in the user plane data of the core network, the terminal device further comprises:
a second receiving unit, configured to receive a request message transmitted by a session management network element before reporting the first information to the network element of the core network, wherein the request message is used for requesting the terminal device to perform performance monitoring on the first model.

59. The terminal device according to claim 58, wherein the request message comprises one or more of following information of the first model:
a model identity;
model performance to be monitored;
a threshold for model performance to be monitored;
a monitoring time period; or
a monitoring location.

60. The terminal device according to claim 54, wherein the network element of the core network is a user plane function network element.

61. The terminal device according to claim 60, wherein the first information is carried in a header of a first data packet transmitted by the terminal device to the user plane function network element.

62. The terminal device according to any one of claims 53 to 61, wherein the first information is used for indicating one or more of following information of the first model:
a model identity;
performance of the first model in a monitoring time period;
a threshold reached by the performance of the first model; or
a location where the performance of the first model is generated.

63. A core network element, comprising a memory and a processor, wherein the memory is configured to store a program, and the processor is configured to invoke the program in the memory to perform the method according to any one of claims 1 to 21.

64. A terminal device, comprising a memory and a processor, wherein the memory is configured to store a program, and the processor is configured to invoke the program in the memory to execute the method according to any one of claims 22 to 31.

65. A chip, comprising a processor, configured to invoke a program from a memory to cause a device installed with the chip to execute the method according to any one of claims 1 to 21.

66. A chip, comprising a processor, configured to invoke a program from a memory to cause a device installed with the chip to execute the method according to any one of claims 22 to 31.

67. A computer-readable storage medium, wherein the computer-readable storage medium stores a program, and the program causes a computer to execute the method according to any one of claims 1 to 21.

68. A computer-readable storage medium, wherein the computer-readable storage medium stores a program, and the program causes a computer to execute the method according to any one of claims 22 to 31.

69. A computer program product, comprising a program that causes a computer to execute the method according to any one of claims 1 to 21.

70. A computer program product, comprising a program that causes a computer to execute the method according to any one of claims 22 to 31.

71. A computer program, wherein the computer program causes a computer to execute the method according to any one of claims 1 to 21.

72. A computer program, wherein the computer program causes a computer to execute the method according to any one of claims 22 to 31.
